# EUROPÄISCHE PATENTANMELDUNG

(11) **EP 1 902 879 A2**
(43) Veröffentlichungstag der Anmeldung: **26.03.2008**
(21) Anmeldenummer: 07018053.4
(22) Anmeldetag: 14.09.2007
(51) Int. Cl.: B60J 1/20

(54) **Rolloanordnung**

(30) Priorität: 25.09.2006 DE 102006046440; 25.09.2006 US 846973 P
(71) Anmelder: BOS GmbH & Co. KG, 73760 Ostfildern (DE)
(72) Erfinder: Gyngell, Allan, Davisburg Mi. 48350 (US); Bowles, Dennis, Fenton Mi. 48430 (US)
(74) Vertreter: Patentanwälte Ruff, Wilhelm, Beier, Dauster & Partner

(57) **Zusammenfassung**

Die Erfindung betrifft Rolloanordnung, insbesondere zur Verwendung in einem Fahrzeug, mit einer sich in einer Haupterstreckungsrichtung (2) erstreckenden hohlrohrförmigen Wickelwelle (10) zur Aufnahme eines abziehbaren flexiblen Flächengebildes, einer in die Wickelwelle (10) eingelegten und als Schraubenfeder ausgebildeten Wickelfeder (12), die sich in der Haupterstreckungsrichtung (2) erstreckt, und einem sich in Haupterstreckungsrichtung (2) erstreckendem Dämpfungsprofil (20), welches in einem Ringraum (16) zwischen der Wickelwelle (10) und der Wickelfeder (12) angeordnet ist.

Erfindungsgemäß ist das Dämpfungsprofil (20) derart ausgebildet ist, dass es mit äußeren Kontaktabschnitten (24) an einer Innenseite der Wickelwelle (10) und mit inneren Kontaktabschnitten (22) an einer Außenseite der Wickelfeder (12) anliegt.

Verwendung insbesondere Rolloanordnungen in Fahrzeugen, beispielsweise für Kofferraumabdeckungen.

## Beschreibung

Die Erfindung betrifft eine Rolloanordnung, die insbesondere zur Verwendung in einem Fahrzeug vorgesehen ist, mit einer sich in einer Haupterstreckungsrichtung erstreckenden hohlrohrförmigen Wickelwelle zur Aufnahme eines abziehbaren flexiblen Flächengebildes, einer in die Wickelwelle eingelegten und als Schraubenfeder ausgebildeten Wickelfeder, die sich in der Haupterstreckungsrichtung erstreckt, und einem sich in Haupterstreckungsrichtung erstreckendem Dämpfungsprofil, welches in einem Ringraum zwischen der Wickelwelle und der Wickelfeder angeordnet ist. Die Erfindung betrifft dabei insbesondere auch solche Rolloanordnungen, bei denen eine sich in Haupterstreckungsrichtung erstreckende Federstange in die Wickelfeder eingelegt ist.

Derartige Rolloanordnungen sind aus der DE 29 41 711 C2 bekannt. Bei diesen bekannten Rolloanordnungen sind zwischen einer Torsionsfeder einerseits und einer außenliegenden Rolle bzw. einer innenliegenden Welle Rohre vorgesehen, die jeweils an der Innenseite bzw. der Außenseite einer Torsionsfeder anliegen. Zweck dieser Rohre ist es, störende Geräusche zu dämpfen, die bei der Tordierung der Torsionsfeder entstehen.

Als nachteilig an den Rolloanordnungen wird angesehen, dass sie den Schall zwar dämpfen, ein Ausschlagen der Torsionsfeder gegen die Rollowandung oder gegen die Welle jedoch nicht verhindern.

### Aufgabe und Lösung

Aufgabe der Erfindung ist es, eine Rolloanordnung zur Verfügung zu stellen, bei der der im Betrieb innerhalb der Rollanordnung entstehende und nach außen dringende Schall reduziert wird.

Erfindungsgemäß wird eine gattungsgemäße Rolloanordnung vorgeschlagen, bei der das Dämpfungsprofil derart ausgebildet, ist, dass es mit äußeren Kontaktabschnitten an einer Innenseite der Wickelwelle und mit inneren Kontaktabschnitten an einer Außenseite der Wickelfeder anliegt. Im Hinblick auf die Geräuschentstehung durch Zusammenwirken der Wickelfeder und der Federstange wird eine gattungsgemäße Rolloanordnung vorgeschlagen, bei der das Dämpfungsprofil derart ausgebildet ist, dass es mit äußeren Kontaktabschnitten an einer Innenseite der Wickelfeder und mit inneren Kontaktabschnitten an einer Außenseite der Federstange anliegt.

Gattungsgemäße Rolloanordnungen dienen insbesondere der Lagerung eines flexiblen Flächengebildes während der Nichtverwendung und dem Einziehen des flexiblen Flächengebildes, um es aus einem Benutzungszustand in einen Nichtbenutzungszustand zu überführen. Im eingezogenen Zustand ist das Flächengebilde vorzugsweise mehrlagig auf der Wickelwelle aufgerollt. Beim manuellen Ausziehen des Flächengebildes wird die Wickelfeder tordiert, so dass sie auf den ausgezogenen Teil des Flächengebildes eine Rückholkraft ausübt. Änderungen im Torsionszustand der Wickelfeder, insbesondere also das manuelle Abziehen des Flächengebildes sowie das automatische Zurückziehen des Flächengebildes, sowie Erschütterung der Rolloanordnung können dazu führen, dass eine radial auf die Wickelfeder wirkende Kraft auftritt, die die Wickelfeder aus ihrer Ausgangslage auslenkt. Zu einer Auslenkung der Wickelfeder kann es darüber hinaus auch durch von außen eingeleitete Erschütterungen kommen. Die Auslenkungen der Wickelfeder führen zu störenden Geräuschen, die insbesondere beim Aufschlagen der Außenseite der Wickelfeder auf der Innenseite der Wickelwelle und beim Aufschlagen der Innenseite der Wickelfeder auf der Außenseite der Federstange entstehen. Durch das erfindungsgemäß vorgesehene spielfrei oder weitgehend spielfrei innen und außen anliegende Dämpfungsprofil, welches je nach Anwendungszweck im Ringraum zwischen der Wickelfeder und der Wickelwelle oder aber im Ringraum zwischen der Wickelfeder und der Federstange vorgesehen ist, wird ein hartes Aufschlagen der Wickelfeder auf der Innenseite der Wickelwelle bzw. auf der Außenseite der Federstange verhindert. Das Dämpfungsprofil verhindert zum einen den unmittelbaren Kontakt zwischen der Wickelfeder einerseits und der Wickelwelle bzw. der Federstange andererseits. Zum anderen verhindert das Dämpfungsprofil auch eine freie und ungebremste Auslenkung der Wickelfeder und das damit einhergehender harte Aufschlagen auf der Innseite der Wickelwelle bzw. auf der Außenseite der Federstange.

Das Dämpfungsprofil ist vorzugsweise aus elastischen Materialien wie Kunststoff oder Gummi gefertigt, die eine geringe Auslenkung der Wickelfeder aus ihrer Ausgangslage erlauben, da eine solche Auslenkung beim Tordieren der Wickelfeder auftreten kann. Neben der Materialwahl ist auch die Gestaltung des Querschnitts des Dämpfungsprofils vorzugsweise so ausgebildet, dass eine begrenzte Auslenkung der Wickelfeder möglich bleibt.

Das Dämpfungsprofil erstreckt sich parallel zur Wickelwelle und zur Wickelfeder in Haupterstreckungsrichtung. Bevorzugt sind Ausführungsformen, bei denen sich das Dämpfungsprofil über die Gesamtlänge der Wickelfeder erstreckt. Zweckmäßig können jedoch auch Ausführungsformen sein, bei denen das Dämpfungsprofil nur an Teilabschnitten der Wickelfeder vorgesehen ist, wobei diese Teilabschnitte vorzugsweise nur soweit voneinander beabstandet sind, dass ein Anschlagen der Wickelfeder an der Wickelwelle bzw. an der Federstange auch in den dazwischenliegenden Abschnitten verhindert wird.

In einer Weiterbildung der Erfindung ist im Falle eines Dämpfungsprofils, welches zwischen der Wickelfeder und der Wickelwelle angeordnet ist, ein Querschnitt des Dämpfungsprofils derart ausgebildet, dass das Dämpfungsprofils in mindestens einem Kontaktbereich an der Außenseite der Wickelfeder anliegt und in mindestens einem Losbereich von der Außenseite der Wickelfeder beabstandet ist. Im Falle eines Dämpfungsprofils, welches zwischen der Wickelfeder und der Federstange angeordnet ist, ist der Querschnitt gemäß dieser Weiterbildung derart ausgebildet, dass das Dämpfungsprofil in mindestens einem Kontaktbereich an der Innenseite der Wickelfeder anliegt und in mindestens einem Losbereich von der Innenseite der Wickelfeder beabstandet ist.

Ein solches Dämpfungsprofil liegt demnach nur in den Kontaktabschnitten, nicht aber vollumfänglich, an der Wickelfeder an. Dadurch kann die Wickelfeder im Zuge der Torsion oder im Zuge von Erschütterungen um ein geringes Maß in den Losbereich ausgelenkt werden. Dies ist insbesondere in Hinblick auf die Torsion von Vorteil, da eine Auslenkung in begrenztem Maße bei der Tordierung der Wickelfeder normal ist. Wird diese Tordierung vollständig verhindert, so führt dies zu einer Erhöhung der manuell aufzubringenden Auszugskraft. Insbesondere von Vorteil sind solche Dämpfungsprofile, deren Kontaktabschnitte in Kontaktbereichen an der Wickelfeder anliegen, die bezüglich ihrer Dimensionierung und/oder Anordnung auf dem Umfang geeignet sind, die Wickelfeder im entspannten Zustand in einer unausgelenkten Ruheposition sicher zu fixieren.

In einer Weiterbildung der Erfindung ist das Dämpfungsprofil derart ausgebildet, dass es in drei Kontaktbereichen an der Wickelfeder anliegt, wobei zwischen den Kontaktbereichen jeweils ein Losbereich liegt.

Die Kontaktbereiche sind dabei vorzugsweise gleichmäßig über den Umfang der Wickelfeder verteilt. Durch die Ausführung mit drei Kontaktbereichen ist eine gute Lagefixierung der Wickelfeder in einem nicht radial ausgelenkten Zustand erreichbar.

In einer Weiterbildung der Erfindung ist das Dämpfungsprofil als Dämpfungshohlprofil ausgebildet.

Ein solches Dämpfungshohlprofil ist umlaufend geschlossen, so dass ein unmittelbarer Kontakt zwischen der Wickelfeder einerseits und der Federstange bzw. der Wickelwelle andererseits zuverlässig verhindert wird. Die Ausbildung als Dämpfungshohlprofil hat darüber hinaus auch bezüglich der Montage Vorteile, da in einfacher Art und Weise die Wickelfeder in das Dämpfungsprofil eingeschoben und anschließend das Dämpfungsprofil mit eingeschobener Wickelfeder in die Wickelwelle eingeschoben werden kann. Entsprechend einfach ist auch die Montage eines Dämpfungsprofils, welches zwischen Wickelfeder und Federstange angeordnet ist.

In einer Weiterbildung der Erfindung weist das Dämpfungsprofil mehrere sich in der Haupterstreckungsrichtung erstreckende Profilsegmente auf, die in einer Umfangsrichtung zumindest nicht auf vollständiger Länge des Dämpfungsprofils miteinander verbunden sind.

Ein solches Dämpfungsprofil mit getrennten Profilsegmenten weist vorzugsweise Profilsegmente auf, die in regelmäßigen Abständen in Umfangsrichtung um die Wickelfeder bzw. um die Federstange verteilt sind. Dabei sind die inneren und äußeren Kontaktabschnitte vorzugsweise derart angeordnet, dass jedes Profilsegment sowohl mindestens einen inneren als auch mindestens einen äußeren Kontaktabschnitt aufweist. Alternativ dazu sind auch Ausführungsformen denkbar und je nach Randbedingungen zweckmäßig, bei denen Profilsegmente mit inneren Kontaktabschnitten und andere Profilsegmente mit äußeren Kontaktabschnitten vorgesehen sind. Besonders vorteilhaft sind Profilsegmente mit rundem Querschnitt.

Die Profilsegmente sind im Bereich eines Verbindungsabschnitts miteinander verbunden, wobei diese Verbindungsabschnitte vorzugsweise an den Stirnseiten des Dämpfungsprofils vorgesehen sind. Zur Erhöhung der Lagestabilität der Profilsegmente kann es auch zweckmäßig sein, mehrere Verbindungsabschnitte vorzusehen, die vorzugsweise in Haupterstreckungsrichtung regelmäßig voneinander beabstandet sind. Der Vorteil der Verwendung eines Dämpfungsprofils mit in Umfangsrichtung nicht auf voller Länge verbunden Profilsegmenten liegt insbesondere in der Materialeinsparung und der Gewichtsreduzierung.

In einer Weiterbildung der Erfindung ist der Querschnitt des Dämpfungsprofils derart ausgebildet, dass eine Radialverschiebung eines inneren oder äußeren Kontaktabschnitts eine in gleiche Richtung wirkende Radialverschiebung eines gegenüberliegenden äußeren bzw. inneren Kontaktabschnitts zur Folge hat.

Unter einer Verschiebung in gleicher Richtung ist in diesem Zusammenhang eine ebenfalls radial nach außen bzw. eine ebenfalls radial nach innen wirkende Verschiebung zu verstehen. Im eingebauten Zustand des Dämpfungsprofils führt eine solche Gestaltung des Dämpfungsprofils dazu, dass die an der Wickelwelle oder der Federstange anliegenden Kontaktabschnitte in Reaktion auf eine Auslenkung des Wickelfeder an die Wickelwelle bzw. an die Federstange angepresst werden, was vorzugsweise zu einer Deformation des Dämpfungsprofils im Bereich der äußeren Kontaktabschnitte führt. Insbesondere bevorzugt sind solche Gestaltungen, bei denen eine Auslenkung der Wickelfeder an verschiedenen über den Umfang wickelwellenseitigen oder federstangenseitigen anliegenden Kontaktabschnitten zu einem erhöhten Anpressdruck führt.

In einer Weiterbildung der Erfindung ist der Querschnitt des Dämpfungsprofils derart ausgebildet, dass eine Radialverschiebung eines inneren oder äußeren Kontaktabschnitts eine Verschiebung mindestens eines anderen inneren bzw. äußeren Kontaktabschnitts zur Folge hat.

Bei einer solchen Ausgestaltung führt die Auslenkung der Wickelfeder und die damit einhergehende Auslenkung eines an der Wickelfeder anliegenden Kontaktabschnitts dazu, dass auch die anderen Kontaktabschnitte, die an der Wickelfeder anliegen, verschoben werden. Die Verschiebung erfolgt dabei in Umfangsrichtung und/oder in radialer Richtung. Die Wickelfeder bleibt dadurch auch im ausgelenkten Zustand im Kontakt mit mehreren anliegenden Kontaktabschnitten des Dämpfungsprofils, so dass eine Rückkehr der Wickelfeder in ihre Ausgangslage nicht zu einem Gegeneinanderschlagen des Dämpfungsprofils und der Wickelfeder führt. Eine verringerte Geräuschentwicklung ist die Folge.

Bei einer Weiterbildung der Erfindung ist Dämpfungsprofil als Dämpfungsschlauch mit polygonalem Querschnitt ausgebildet, wobei der Querschnitt konkave Einbuchtungen aufweist, die die inneren Kontaktabschnitt umfassen, und konvexe Ausbuchtungen aufweist, die die äußeren Kontaktabschnitte umfassen.

Als Dämpfungsschlauch mit polygonalem Querschnitt ist dabei ein Dämpfungsschlauch mit einer Wandung mit in etwa gleichmäßiger Wandungsstärke zu verstehen, dessen Querschnitt nicht kreisförmig ist, sondern dessen Querschnitt eine Formgebung aufweist, die Teilbereiche, in denen die Wandung in Kontakt mit der Wickelfeder ist, und andere Teilbereiche, in denen die Wandung in Kontakt mit der Wickelwelle bzw. der Federstange ist, aufweist. Diese Kontaktabschnitte sind konkav bzw. konvex ausgebildet. Besonders bevorzugt sind dabei Ausführungsformen mit jeweils drei oder mehr konvexen äußeren Kontaktabschnitten und konkaven inneren Kontaktabschnitten. Bei einem solchen Dämpfungsprofil kann eine Radialverschiebung eines Kontaktabschnitts zu einer Verschiebung benachbarter Kontaktabschnitte führen, so dass der Kontakt zwischen allen Kontaktabschnitten und der Wickelfeder erhalten bleibt.

In einer Weiterbildung der Erfindung ist das Dämpfungsprofil als Dämpfungsschlauch mit vorzugsweise kreisrundem Querschnitt und mit vom Dämpfungsschlauch ausgehenden radial nach innen und/oder radial nach außen weisenden Kontaktstegen ausgebildet ist, wobei an distalen Enden der Kontaktstege jeweils die inneren bzw. die äußeren Kontaktabschnitte vorgesehen sind

Besonders bevorzugt ist dabei die Verwendung von Kontaktabschnitten, die elastisch verformbar sind. Dies ist sowohl in Hinblick auf die Auslenkung der Wickelfeder von Vorteil als auch in Hinblick auf die Verwendung ein und desselben Dämpfungsprofiltyps für verschiedene Wickelrollen, Wickelfedern und/oder Federstangen.

In einer Weiterbildung der Erfindung weist das Dämpfungsprofil im nicht eingebauten Zustand einen geringeren Innendurchmesser und/oder einen größeren Außendurchmesser auf als der Ringraum, in dem es im eingebauten Zustand angeordnet ist.

Ein solches Dämpfungsprofil ist im eingebauten Zustand elastisch verformt, so dass bei einer Auslenkung der Wickelfeder in radialer Richtung die der Auslenkung abgewandten Kontaktabschnitte in Richtung ihres entspannten Zustandes nachgeführt werden und so in Kontakt mit der Wickelfeder bleiben.

### Kurzbeschreibung der Zeichnungen

Weitere Merkmale der Erfindung ergeben sich aus den in den Figuren dargestellten und nachfolgend beschrieben Ausführungsformen der Erfindung. Dabei zeigen:
- Fig. 1a bis 1c: eine erste Ausführungsform einer erfindungsgemäßen Rolloanordnung mit einem Dämpfungsprofil in einer perspektivischen, geschnittenen Darstellung sowie in verschiedenen geschnittenen Seitenansichten mit ausgelenkter und nicht ausgelenkter Wickelfeder,
- Fig. 2a bis 2c: eine zweite Ausführungsform einer erfindungsgemäßen Rolloanordnung mit einem Dämpfungsprofil in einer perspektivischen, geschnittenen Darstellung sowie in verschiedenen geschnittenen Seitenansichten mit ausgelenkter und nicht ausgelenkter Wickelfeder,
- Fig. 3: eine dritte Ausführungsform einer erfindungsgemäßen Rolloanordnung in einer geschnittenen Seitendarstellung,
- Fig. 4a und 4b: eine vierte Ausführungsform einer erfindungsgemäßen Rolloanordnung in zwei geschnittenen Seitendarstellungen mit ausgelenkter und nicht ausgelenkter Wickelfeder,
- Fig. 5a und 5b: eine fünfte Ausführungsform einer erfindungsgemäßen Rolloanordnung in zwei geschnittenen Seitendarstellungen mit ausgelenkter und nicht ausgelenkter Wickelfeder,
- Fig. 6a und 6b: eine sechste Ausführungsform einer erfindungsgemäßen Rolloanordnung in zwei geschnittenen Seitendarstellungen mit ausgelenkter und nicht ausgelenkter Wickelfeder und
- Fig. 7: eine siebte Ausführungsform einer erfindungsgemäßen Rolloanordnung in einer geschnittenen Seitendarstellung.

### Detaillierte Beschreibung der Zeichnungen

Die dargestellten Ausführungsformen von erfindungsgemäßen Rolloanordnungen zeigen jeweils nur die Wickelwelle mitsamt der Wickelfeder, dem Dämpfungselement und zum Teil mitsamt der Federstange. Die übrigen Komponenten der Rolloanordnungen wie beispielsweise das flexibles Flächengebilde oder ein umgebendes Gehäuse sind aus Gründen der Übersichtlichkeit nicht dargestellt.

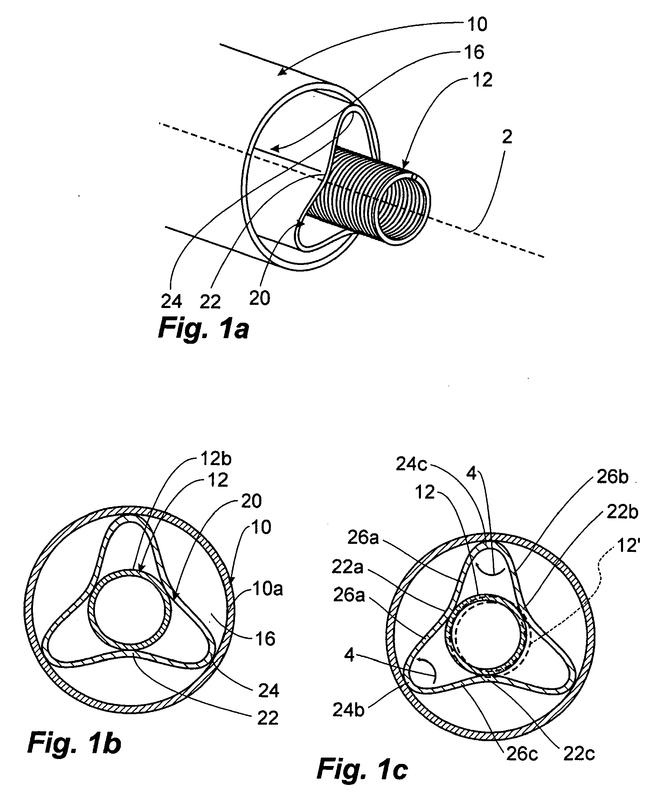

Die Fig. 1a zeigt am Bespiel einer ersten Ausführungsform der Wickelwelle einer erfindungsgemäßer Rolloanordnung den grundsätzlichen Aufbau: Innerhalb der Wickelwelle 10 ist eine Wickelfeder 12 angeordnet, wobei die Wickelwelle 10 und die Wickelfeder 12 eine gemeinsame Haupterstreckungsrichtung 2 aufweisen. In einem ringförmigen Hohlraum 16 zwischen der Wickelwelle 10 und der innenliegenden Wickelfeder 12 ist ein Dämpfungsprofil 20 eingelegt, welches mit inneren Kontaktabschnitten 22 an der Wickelfeder und mit äußeren Kontaktabschnitten 24 an der Wickelwelle 12 jeweils spielfrei anliegt.

Figur 1b zeigt die in Figur 1a dargestellte Wickelwelle 10 mitsamt der eingelegten Wickelfeder 12 und dem Dämpfungsprofil 20 in einer geschnittenen Seitenansicht. Das Dämpfungsprofil 20 liegt mit seinen äußeren Kontaktabschnitten 24 - wie oben beschrieben - an einer Innenwandung 10a der Wickelwelle 10 an. Mit seinen inneren Kontaktabschnitten 22 liegt das äußere Dämpfungsprofil 20 an der Außenseite 12b der Wickelfeder 12 an. Die drei inneren Kontaktabschnitte 22 und die drei äußeren Kontaktabschnitte 24 sind dabei alternierend auf den Umfang des Dämpfungsprofils 20 angeordnet. Der Querschnitt des Dämpfungsprofils 20 weist eine polygonale, in etwa dreizackige Form auf, wobei die äußeren Kontaktabschnitte 24 im Bereich der abgerundeten Zacken und die inneren Kontaktabschnitte 22 zwischen den Zacken angeordnet sind. Im Bereich der äußeren Kontaktabschnitte 24 ist das äußere Dämpfungsprofil 20 konvex und im Bereich der inneren Kontaktabschnitte 22 konkav ausgebildet.

Die dargestellte Gestaltung gewährleistet einen besonders ruhigen Betrieb. Das Dämpfungsprofil ist durch seine dünnwandige und einfache Gestaltung sehr leicht und kann günnstig hergestellt werden. Die Wickelfeder 12 wird durch das Dämpfungsprofil 20 in seiner in den Fig. 1a und 1b dargestellten Lage gehalten, kann aber dennoch aufgrund der Tatsache, dass das Dämpfungsprofil 20 aus einem elastischen Material besteht, und der Formgestaltung des Dämpfungsprofils 20 in dem für die bestimmungsgemäße Torsion erforderlichen Maß ausgelenkt werden. Ein unmittelbarer Kontakt der Wickelfeder 12 mit der Wickelwelle 10 ist durch das Dämpfungsprofil 20 ebenso ausgeschlossen wie eine hohe Radialbeschleunigung der Wickelfeder, beispielsweise in Folge von Erschütterungen.

Fig. 1c zeigt das Verhalten des Dämpfungsprofils 20 für den Fall einer radialen Auslenkung der Wickelfeder 12. Die Wickelfeder ist im dargestellten Zustand um eine geringe Distanz nach links ausgelegt, wobei die Ausgangslage 12' gestrichelt dargestellt ist. Die Auslenkung führt dazu, dass ein anliegender innerer Kontaktabschnitt 22a ebenfalls radial nach außen ausgelenkt ist. In Reaktion darauf werden Verbindungsabschnitte 26a des Dämpfungsprofils 20, die den inneren Kontaktabschnitt 22a mit den benachbarten äußeren Kontaktabschnitten 24b, 24c verbinden, um die benachbarten äußeren Kontaktabschnitte 24b, 24c geschwenkt. Dies hat zur Folge, dass die äußeren Kontaktabschnitte 24b, 24c leicht in Richtung der Pfeile 4 verdreht werden. Dies wiederum führt zu einer entsprechenden Verdrehung der den Verbindungsabschnitten 26a gegenüberliegenden Verbindungsabschnitte 26b, 26c, die dadurch eine radial nach innen gewandte Nachführung der inneren Kontaktabschnitte 22b, 22c bewirken. Dadurch wird erreicht, dass auch in diesem ausgelenkten Zustand der Wickelfeder 12 alle drei Kontaktabschnitte 22a, 22b, 22c an der Außenseite 12b der Wickelfeder 12 anliegen. Diese kontinuierliche Nachführung, die zumindest bei nur geringen Erschütterungen einen stetigen Kontakt der Innenabschnitte 22a, 22b, 22c des Dämpfungsprofils 20 mit der Wickelfeder 12 gewährleistet, verhindert unerwünschte Geräusche wie Klappern oder Rasseln.

Bei der Ausführungsform der Fig. 1a bis 1c ist eine Dimensionierung des Dämpfungsprofils 20 besonders vorteilhaft, bei der der durch die äußeren Kontaktabschnitte 24a, 24b, 24c definierte Außendurchmesser des Dämpfungsprofils 20 im nicht eingebauten Zustand größer ist als der Innendurchmesser der Wickelwelle 10. Der dadurch im eingebauten Zustand erreichbare elastisch gespannte Zustand unterstützt die oben beschriebene Nachführung zusätzlich.

Bei nicht dargestellten Variationen dieser ersten Ausführungsform ist der Querschnitt des Dämpfungsprofils in der Art einer umlaufenden Rechteckfunktion ausgebildet, bei der wechselnd Umfangsabschnitte innen an der Wickelfeder anliegen und außen an der Wickelwelle anliegen, wobei die Umfangsabschnitte durch radiale Verbindungsabschnitte miteinander verbunden sind.

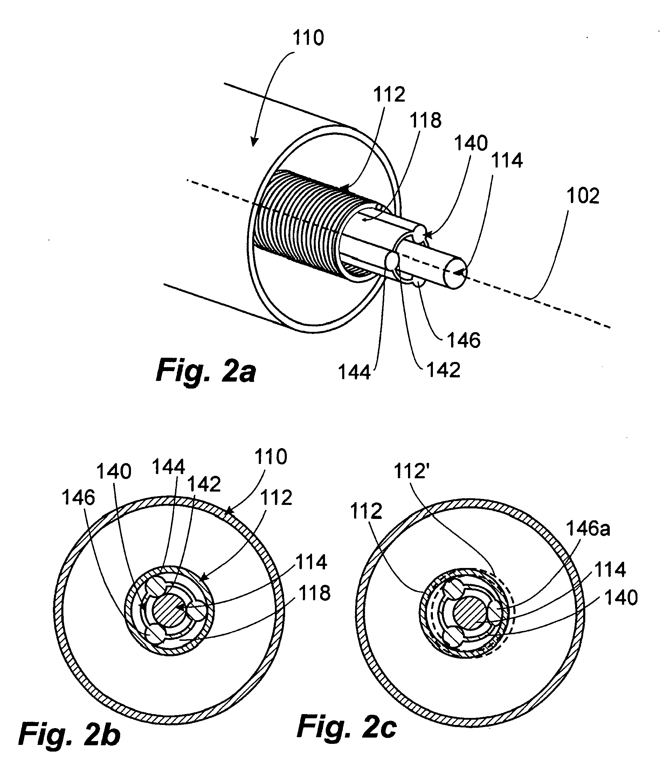

Die Figuren 2a bis 2c zeigen eine Wickelwelle einer zweiten Ausführungsform einer erfindungsgemäßen Rolloanordnung. Innerhalb der Wickelwelle 110 ist eine Wickelfeder 112 angeordnet. Diese als Schraubenfeder ausgebildete Wickelfeder 112 ist mittels einer in die Wickelfeder 112 eingelegten Federstange 114 bezüglich ihrer radialen Beweglichkeit eingeschränkt. In einem Ringraum 118 zwischen der Wickelfeder 112 und der Federstange 114 ist ein Dämpfungsprofil 140 angeordnet. Die Wickelwelle 110, die Wickelfeder 112, die Federstange 114 und das Dämpfungsprofil 140 erstrecken sich parallel zueinander in einer Haupterstreckungsrichtung 102.

Das Dämpfungsprofil 140 ist als Dämpfungsschlauch mit etwa kreisförmigem Querschnitt ausgebildet, wobei über den Umfang verteilt insgesamt drei Verdickungen 146 vorgesehen sind. Die Verdickungen 146 erstrecken sich vom Dämpfungsschlauch radial nach innen und außen, wobei sie sowohl innere Kontaktabschnitte 142 als auch äußere Kontaktabschnitte 144 bilden. Mit den inneren Kontaktabschnitten 142 liegt das Dämpfungsprofil 140 an der Federstange 114 an und mit den äußeren Kontaktabschnitten liegt das Dämpfungsprofil 140 an der Wickelfeder 112 an.

Fig. 2c zeigt, wie sich das Dämpfungsprofil 140 bei einer Auslenkung der Wickelfeder 112 aus ihrer Ausgangsstellung 112' verhält. Das Dämpfungsprofil 140 verhindert dabei einen direkten Kontakt zwischen der Federstange 114 und der Wickelfeder 112. Dabei wird eine Verdickung 146a wird durch die Auslenkung elastisch komprimiert. Dadurch erlaubt das Dämpfungsprofil 140 zwar eine Auslenkung der Wickelfeder, drückt dabei jedoch die Wickelfeder wieder in ihre Ausgangsstellung zurück. Die Wickelfeder 112 und die Federstange 114 sind stets über mindestens eine der Verdickungen 146 in mittelbarem Kontakt miteinander.

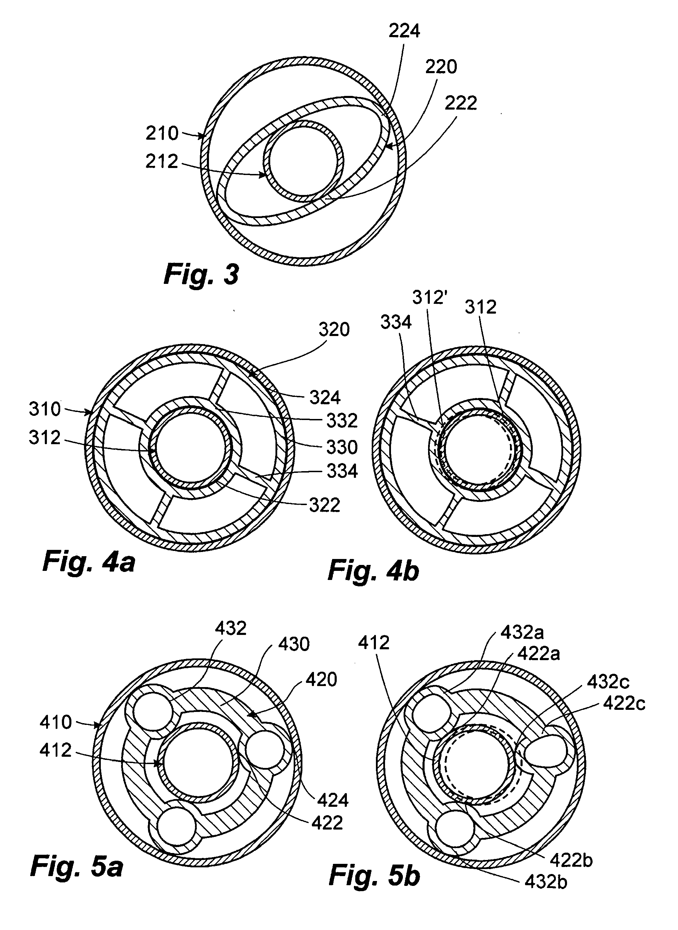

Die Figuren 3 bis 7 zeigen Querschnitte weiterer Dämpfungsprofile, die zwischen Wickelwellen 210, 310, 410, 510, 610 und Wickelfedern 212, 312, 412, 512, 612 angeordnet sind. In gleicher oder entsprechend angepasster Form können diese Dämpfungsprofile jedoch auch zwischen Federstangen und Wickelfedern Verwendung finden. Soweit nicht anders gekennzeichnet, weisen die Dämpfungsprofile über ihre gesamte Länge den jeweils dargestellten Querschnitt auf.

Die Figur 3 zeigt eine besonders einfache Gestaltung eines Dämpfungsprofils 220 einer erfindungsgemäßen Rolloanordnung. Dieses Dämpfungsprofil 220 hat einen in etwa ovalen Querschnitt und weist jeweils zwei an der Wickelwelle 210 anliegende äußere Kontaktabschnitte 224 und zwei an der Wickelfeder 212 anliegende innere Kontaktabschnitte 222 auf. Ein solches Dämpfungsprofil 220 ist insbesondere aufgrund des geringen Gewichtes, des einfachen Aufbaus sowie der damit verbundenen geringen Kosten von Vorteil.

Die Figuren 4a und 4b zeigen ein Dämpfungsprofil 320, welches aus einem Außenschlauch 330 und einem Innenschlauch 332 besteht, die über Verbindungsstege 334 miteinander verbunden sind. Die Außenfläche des Außenschlauchs 330 bildet dabei den äußeren Kontaktabschnitt 324 des Dämpfungsprofils und die Innenseite des Innenschlauchs 332 bildet dabei den inneren Kontaktabschnitt 322. Dadurch, dass der Innenschlauch 332 und der Außenschlauch 330 lediglich über schmale Stege 334 miteinander verbunden sind, ist - wie in Fig. 4b dargestellt ist - eine radiale Auslenkung der Wickelfeder 312 aus ihrer Ausgangslage 312' bei gleichzeitiger elastischer Dehnung bzw. elastischer Kompression der Verbindungsstege 334 möglich.

Das in den Figuren 5a und 5b dargestellte Dämpfungsprofil 420 ähnelt dem Dämpfungsprofil 40 der Ausführungsform der Figuren 2a bis 2c. Es weist ebenfalls einen kreisförmigen Schlauchabschnitt 430 auf, der an drei jeweils um 120° voneinander beabstandeten Stellen Verdickungen 432 aufweist. Diese Verdickungen 432 erstrecken sich vom kreisförmigen Querschnitt des Schlauchs 430 nach innen und nach außen. Die nach innen weisenden Abschnitte der Verdickungen 432 bilden die inneren Kontaktabschnitte 422. Die nach außen weisenden Abschnitte der Verdickungen 432 bilden die äußeren Kontaktabschnitte 424. Abweichend von der Ausführungsform der Figuren 2a bis 2c sind in den Verdickungen 432 Hohlröhren vorgesehen, was in Hinblick auf eine elastische Verformung von Vorteil ist. Eine Auslenkung der Wickelfeder 412 aus der Ausgangslage führt - wie in Fig. 5b dargestellt ist - bei dieser Ausführungsform dazu, dass zwei der Verdickungen 432a, 432b in radialer Richtung komprimiert werden, was über die Wandung 430 des Schlauchs 430 eine Komprimierung der dritten Verdickungen 432c in Umfangsrichtung und damit eine Ausdehnung dieser Verdickungen 432c in Radialrichtung zu Folge hat. Somit ist auch bei der Ausführungsform der Figuren 5a und 5b gewährleistet, dass zumindest kleinere Auslenkungen der Wickelfeder 412 ohne einen Kontaktverlust der inneren Kontaktabschnitte 422 von der Außenseite der Wickelfeder 412 möglich sind.

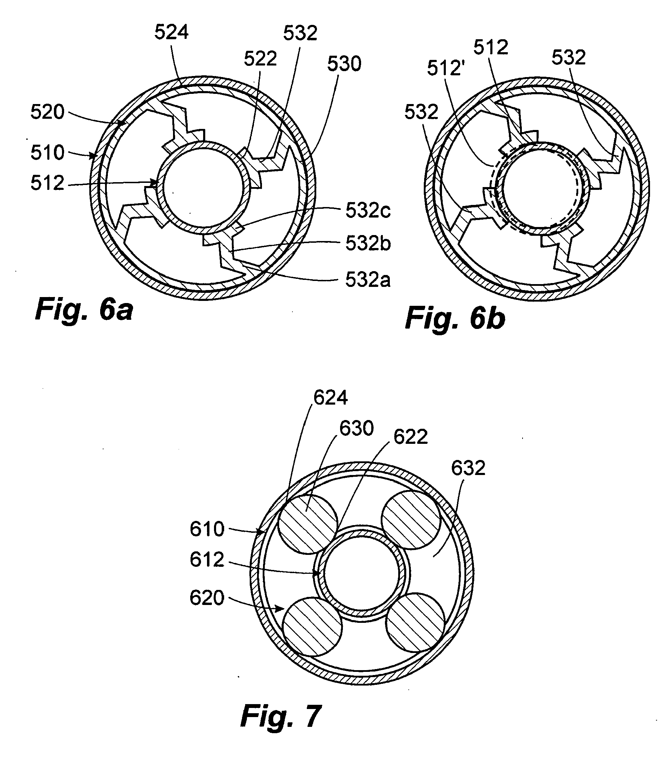

Die Figuren 6a und 6b zeigen eine Ausführungsform mit einem Dämpfungsprofil 520, welches aus einem an der Innenwandung der Wickelwelle 510 anliegenden Schlauchabschnitt 530 sowie vier sich von dem Schlauchabschnitt 530 nach innen erstreckenden Kontaktstegen 532 besteht. Der Schlauchabschnitt 530 bildet dabei einen äußeren Kontaktabschnitt 524. Die Kontaktstege 532 weisen jeweils zueinander angewinkelte innere und äußere Schenkel 532a, 532b auf. Die inneren Schenkel 532b mündet jeweils in einem inneren Kontaktabschnitt 522, der zur Anlage an der Wickelfeder 512 als konkav gestaltete Kontaktpfannen 532c ausgebildet ist. Die Kontaktstege 532 sind vorzugsweise so dimensioniert, dass sie bei eingeführter Wickelfeder 512 elastisch vorgespannt sind. Sobald es zu einer Auslenkung der Wickelfeder 512 aus ihrer Ausgangslage 512' kommt, führt dies zu einer Erhöhung der elastischen Spannung desjenigen Kontaktstegs 532a, der in der Richtung angeordnet ist, in die die Auslenkung erfolgt, während der gegenüberliegende Kontaktsteg 532b eine elastische Entspannung erfährt, dabei jedoch im Kontakt bleibt mit der Wickelfeder 512.

Die Figur 7 zeigt ein Dämpfungsprofil 620, welches über vier über den Umfang verteilte Profilsegmente 630 verfügt, die in der Schnittebene der Figur 7 in Umfangsrichtung nicht miteinander verbunden sind. Die Profilsegmente 630 weisen einen jeweils kreisförmigen Querschnitt auf, wobei die aufeinander zugewandten Seiten der Profilsegmente 630 innere Kontaktabschnitte 622 bilden, die an einer Wickelfeder 612 anliegen, und wobei die voneinander weg gewandten Seiten der Profilabschnitte 630 äußere Kontaktabschnitte 624 bilden, die an einer Wickelwelle 610 anliegen. Die Profilsegmente 630 sind außerhalb der dargestellten Schnittebene untereinander über Verbindungsstege 632 miteinander verbunden, wobei solche Verbindungsstege 632 zumindest an den Stirnseiten des Dämpfungsprofils vorgesehen sind. Darüber hinaus ist es zweckmäßig, weitere Verbindungsabschnitte 632 über die Länge des Dämpfungsprofils zu verteilen. Neben der Materialersparnis, die mit einer derartigen Gestaltung eines Dämpfungsprofils einhergeht, ist bei einem solchen Dämpfungsprofil das Verhalten bei einer Auslenkung der Wickelfeder 612 besonders vorteilhaft. Die Profilsegmente 630 sind im begrenzten Maße in Umfangsrichtung beweglich, so dass sie bei gleichzeitiger Kompression elastisch aus ihrer in Figur 7 dargestellten Ausgangslage ausgelenkt werden können. Somit ist eine zweckmäßige begrenzte Beweglichkeit der Wickelfeder 612 gegeben.

## Patentansprüche

1. Rolloanordnung, insbesondere zur Verwendung in einem Fahrzeug, mit
- einer sich in einer Haupterstreckungsrichtung (2; 102) erstreckenden hohlrohrförmigen Wickelwelle (10; 110; 210; 310; 410; 510; 610) zur Aufnahme eines abziehbaren flexiblen Flächengebildes,
- einer in die Wickelwelle eingelegten und als Schraubenfeder ausgebildeten Wickelfeder (12; 112; 212; 312; 412; 512; 612), die sich in der Haupterstreckungsrichtung erstreckt, und
- einem sich in Haupterstreckungsrichtung erstreckendem Dämpfungsprofil (20; 220; 320; 420; 520; 620), welches in einem Ringraum (16) zwischen der Wickelwelle und der Wickelfeder angeordnet ist,
**dadurch gekennzeichnet, dass**
- das Dämpfungsprofil derart ausgebildet ist, dass es mit äußeren Kontaktabschnitten (24; 224; 324; 424; 524; 624) an einer Innenseite der Wickelwelle und mit inneren Kontaktabschnitten (22; 222; 322; 422; 522; 622) an einer Außenseite der Wickelfeder anliegt.

2. Rolloanordnung nach Anspruch 1,
**dadurch gekennzeichnet, dass**
ein Querschnitt des Dämpfungsprofils (20; 220; 420; 520; 620) derart ausgebildet ist, dass das Dämpfungsprofils
- in mindestens einem Kontaktbereich an der Außenseite der Wickelfeder (12; 212; 412; 512; 612) anliegt und
- in mindestens einem Losbereich von der Außenseite der Wickelfeder beabstandet ist.

3. Rolloanordnung, insbesondere zur Verwendung in einem Fahrzeug, mit
- einer sich in einer Haupterstreckungsrichtung (102) erstreckenden hohlrohrförmigen Wickelwelle (110) zur Aufnahme eines abziehbaren flexiblen Flächengebildes,
- einer in die Wickelwelle eingelegten und als Schraubenfeder ausgebildeten Wickelfeder, (112), die sich in der Haupterstreckungsrichtung erstreckt,
- einer in die Wickelfeder (112) eingelegten und sich in Haupterstreckungsrichtung erstreckenden Federstange (114) und
- einem sich in Haupterstreckungsrichtung erstreckendem Dämpfungsprofil (140), welches in einem Ringraum (118) zwischen der Wickelwelle und der Wickelfeder angeordnet ist,
**dadurch gekennzeichnet, dass**
- das Dämpfungsprofil (140) derart ausgebildet ist, dass es mit äußeren Kontaktabschnitten (144) an einer Innenseite der Wickelfeder und mit inneren Kontaktabschnitten (142) an einer Außenseite der Federstange (114) anliegt.

4. Rolloanordnung nach Anspruch 3,
**dadurch gekennzeichnet, dass**
ein Querschnitt des Dämpfungsprofils (140) derart ausgebildet ist, dass das Dämpfungsprofils
- in mindestens einem Kontaktbereich an der Innenseite der Wickelfeder (112) anliegt und
- in mindestens einem Losbereich von der Innenseite der Wickelfeder (112) beabstandet ist.

5. Rolloanordnung nach einem der Ansprüche 2 und 4,
**dadurch gekennzeichnet, dass**
das Dämpfungsprofil (20; 140; 420) derart ausgebildet ist, dass es in drei Kontaktbereichen an der Wickelfeder anliegt, wobei zwischen den Kontaktbereichen jeweils ein Losbereich liegt.

6. Rolloanordnung nach einem der vorstehenden Ansprüche,
**dadurch gekennzeichnet, dass** das Dämpfungsprofil (20; 140; 220; 320; 420; 520) als Dämpfungshohlprofil ausgebildet ist.

7. Rolloanordnung nach einem der Ansprüche 1 bis 5,
**dadurch gekennzeichnet, dass** das Dämpfungsprofil (620) mehrere sich in der Haupterstreckungsrichtung erstreckende Profilsegmente (630) aufweist, die zumindest nicht auf vollständiger Länge des Dämpfungsprofils in einer Umfangsrichtung miteinander verbunden sind.

8. Rolloanordnung nach Anspruch 7,
**dadurch gekennzeichnet, dass** die Profilsegmente (630) zumindest an einer Stirnseite durch einen umlaufenden Verbindungssteg (632) miteinander verbunden sind.

9. Rolloanordnung nach einem der vorstehenden Ansprüche,
**dadurch gekennzeichnet, dass**
der Querschnitt des Dämpfungsprofils (20) derart ausgebildet ist, dass eine Radialverschiebung eines inneren oder äußeren Kontaktabschnitts (22, 24) eine in gleiche Richtung wirkende Radialverschiebung eines gegenüberliegenden äußeren bzw. inneren Kontaktabschnitts (24, 22) zur Folge hat.

10. Rolloanordnung nach einem der vorstehenden Ansprüche,
**dadurch gekennzeichnet, dass**
der Querschnitt des Dämpfungsprofils (20; 420) derart ausgebildet ist, dass eine Radialverschiebung eines inneren oder äußeren Kontaktabschnitts (22a; 422a, 422c) eine Verschiebung mindestens eines anderen inneren bzw. äußeren Kontaktabschnitts (22b, 22c; 422b) zur Folge hat.

11. Rolloanordnung nach einem der vorstehenden Ansprüche,
**dadurch gekennzeichnet, dass**
das Dämpfungsprofil (20) als Dämpfungsschlauch mit polygonalem Querschnitt ausgebildet ist, wobei der Querschnitt
- konkave Einbuchtungen aufweist, die die inneren Kontaktabschnitt (22) umfassen, und
- konvexe Ausbuchtungen aufweist, die die äußeren Kontaktabschnitte (24) umfassen.

12. Rolloanordnung nach einem der Ansprüche 1 bis 10,
**dadurch gekennzeichnet, dass**
das Dämpfungsprofil (520) als Dämpfungsschlauch (530) mit vorzugsweise kreisrundem Querschnitt und mit vom Dämpfungsschlauch (530) radial nach innen und/oder radial nach außen weisenden Kontaktstegen (532) ausgebildet ist, wobei an distalen Enden (532c) der Kontaktstege (532) jeweils die inneren bzw. die äußeren Kontaktabschnitte (522) vorgesehen sind.

13. Rolloanordnung nach einem der vorstehenden Ansprüche,
**dadurch gekennzeichnet, dass**
das Dämpfungsprofil (20; 520) im nicht eingebauten Zustand einen geringeren Innendurchmesser und/oder einen größeren Außendurchmesser aufweist als der Ringraum (16), in dem es im eingebauten Zustand angeordnet ist.
